# EUROPÄISCHE PATENTSCHRIFT

(11) **EP 3 292 907 B1**
(45) Veröffentlichungstag und Bekanntmachung des Hinweises auf die Patenterteilung: **21.07.2021**
(21) Anmeldenummer: 17151316.1
(22) Anmeldetag: 13.01.2017
(51) Int. Cl.: B01J 13/02, B01J 13/20, C04B 20/00

(54) **DÄMMSTOFF**
INSULATING MATERIAL
MATÉRIAU ISOLANT

(30) Priorität: 12.09.2016 DE 102016117085
(43) Veröffentlichungstag der Anmeldung: 14.03.2018
(73) Patentinhaber: Interbran Raw Materials GmbH, 69469 Weinheim (DE)
(72) Erfinder: SCHÜMCHEN, Prof. (Ro) Dr. H. C. Kurt, 53949 Dahlem (DE)
(74) Vertreter: Von Rohr Patentanwälte Partnerschaft mbB

(56) Entgegenhaltungen:
- WO-A1-2008/116188
- DE-U1-202011 050 485
- US-A- 2 572 483
- US-A1- 2005 098 317

## Beschreibung

Die vorliegende Erfindung betrifft das technische Gebiet der Dämmstoffe, insbesondere zur Wärmedämmung von Gebäuden.

Insbesondere betrifft die vorliegende Erfindung ein poröses mineralisch basiertes Material, wie im beigefügten Anspruch 1 beschrieben, welches sich zur Verwendung als Dämmstoff oder Füllstoff zu (Wärme-) Dämmzwecken eignet. Weiterhin betrifft die Erfindung die Verwendung des porösen Materials als Dämmstoff bzw. zur Herstellung von Baumaterialien, wie im beigefügten Anspruch 5 beschrieben.

Weiterhin betrifft die vorliegende Erfindung ein Verfahren zur Herstellung eines mineralisch basierten porösen Materials, wie im beigefügten Anspruch 7 beschrieben. Schließlich betrifft die vorliegende Erfindung einen Dämmstoff, eine Baustofftrockenmischung sowie pastöse Dämmmassen und Wärmedämmungen, welche ein poröses Material aufweisen.

Es ist bekannt, die Wärmeleitfähigkeit von Bauelementen oder Einbauten, welche gasgefüllte Hohlräume besitzen, dadurch zu verringern, dass die Hohlräume anstelle von Luft mit einem Gas oder Gasgemisch mit einer deutlich geringeren Wärmeleitfähigkeit, wie beispielsweise einem Edelgas, gefüllt werden. Dieses Prinzip wird unter anderem bei der Verbesserung der Wärmedämmung von Fenstern verwendet, indem zwischen die Fensterscheiben eine Edelgasfüllung eingebracht wird. Auf diese Weise lässt sich die Wärmedämmung bei Beibehaltung der optischen Eigenschaften des Fensters insgesamt sowie einer nur vernachlässigbaren Änderung des Gewichts deutlich verbessern.

Ähnliche Methoden werden beispielsweise auch bei der Verwendung von Kunststoffschäumen oder in Paneelen zur Wärmedämmung angewandt. Auch in diesen Fällen wird stets ein Gas mit einer deutlich geringeren Wärmeleitfähigkeit als Luft verwendet, um die Wärmedämmeigenschaften des resultierenden Werkstoffs bzw. Werkstücks deutlich zu verbessern.

Auch die DE 20 2011 050 485 U1 beschreibt ein Dämmelement, welches einen gegliederten gasdurchlässigen wärme- und/oder schallisolierenden Dämmstoff mit zergliederten Zwischenräumen und inneren Oberflächen und ein in den Zwischenräumen befindliches Gas bzw. eine Gasmischung aufweist, wobei der gasdurchlässige Dämmstoff mit einer wärmedämmend optimierten Gasfüllung befüllt oder befüllbar ausgebildet und im Wesentlichen gasdicht verschlossen ist.

US2572483A offenbart ein Verfahren zum Expandieren von Perlit in einem Gegenstrom eines Heißgases.

Die zuvor genannten Dämmstoffe bzw. Dämmstoffsysteme haben den Nachteil, dass oftmals vergleichsweise große Gasvolumina in weniger großen (Hohl-)Räumen eingeschlossen sind, so dass bei Beschädigung der äußeren Hülle des Dämmstoffes, beispielsweise des Dämmelements oder -paneels, das wärmedämmende Gas vollständig entweicht. Hierdurch wird die wärmedämmende Wirkung des Gases aufgehoben.

Darüber hinaus ist insbesondere bei der Verwendung von kunststoffbasierten Materialien oftmals eine erhöhte Brennbarkeit gegeben, so dass die erhaltenen Dämmstoffe nicht ohne aufwendige chemische Behandlung oder ergänzende Brandschutzmaßnahmen verwendet werden können.

Weiter werden zur Verringerung der Dichte der Wärmedämmbauteile beispielsweise Mikrohohlkugeln aus Glas oder Keramik verwendet, welche mit Luft oder einem wärmedämmenden Gas gefüllt sind.

So beschreibt beispielsweise die WO 2008/116188 A1 ein Baumaterial, welches Mikrohohlkugeln, ein organisches Bindemittel und ein anorganische Bindemittel aufweist.

Die Herstellung derartiger Mikrohohlkugeln ist jedoch verfahrenstechnisch oftmals sehr aufwendig, insbesondere wenn spezielle Gasfüllungen in die Mikrohohlkugeln eingearbeitet werden sollen. Die Mikrohohlkugeln sind zwar in der Lage, bei ihrer Einarbeitung in Baustoffe bzw. Baustoffmischungen, die Dichte der Baustoffe zu reduzieren, jedoch wird die Wärmeleitfähigkeit der so hergestellten Werkstücke bzw. Bauteile nur geringfügig reduziert, d. h. eine deutlich verbesserte Wärmedämmung lässt sich mit den Mikrohohlkugeln nicht erzielen.

Es besteht also weiterhin das Bedürfnis nach Materialien mit geringer Dichte, welche sich zur Verwendung in Dämmstoffen eignen, sei es als Zusatz zu Baumaterialien oder beispielsweise in loser Schüttung, um die Wärmedämmeigenschaften der resultierenden Baustoffe bzw. Bauteile deutlich zu verbessern.

Eine Aufgabe der vorliegenden Erfindung ist folglich darin zu sehen, neue Dämmmaterialien bereitzustellen, welche die Nachteile der Materialien des Standes der Technik vermeiden, zumindest jedoch abschwächen.

Es ist eine weitere Aufgabe der vorliegenden Erfindung, ein neuartiges Material bereitzustellen, welches gegenüber bekannten Materialien verbesserte Wärmedämmeigenschaften aufweist, wobei gleichzeitig das spezifische Gewicht des Materials gegenüber den bekannten Materialien nicht erhöht ist.

Darüber hinaus ist eine Aufgabe der vorliegenden Erfindung, ein Material bereitzustellen, welches sich in hervorragender Weise zur Verwendung als Dämmstoff zur Wärmedämmung eignet, und zwar sowohl als Füllstoff in Baustoffmischungen bzw. zur Wärmedämmung in Putzen bzw. Dämmmaterialien als auch in loser Schüttung.

Eine weitere Aufgabe der vorliegenden Erfindung ist darin zu sehen, ein Verfahren bereitzustellen, welches es ermöglicht, auf einfache Art und Weise hocheffiziente Dämmstoffe bereitzustellen, insbesondere wobei bekannte Dämmstoffe bzw. Dämmmaterialien so modifiziert werden, dass ihre Wärmedämmung signifikant verbessert wird.

Gegenstand der vorliegenden Erfindung gemäß einem ersten Aspekt der vorliegenden Erfindung ist somit ein poröses mineralisch basiertes Material nach Anspruch 1; weitere vorteilhafte Ausgestaltungen dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist die Verwendung eines porösen Materials als Dämmstoff nach Anspruch 5.

Wiederum weiterer Gegenstand der vorliegenden Erfindung gemäß einem dritten Aspekt der vorliegenden Erfindung ist die Verwendung eines porösen Materials zur Herstellung von Baumaterialien nach Anspruch 6.

Wiederum weiterer Gegenstand der vorliegenden Erfindung gemäß einem vierten Aspekt der vorliegenden Erfindung ist ein Verfahren zur Herstellung eines mineralisch basierten porösen Materials nach Anspruch 7; weitere vorteilhafte Ausgestaltungen dieses Erfindungsaspektes sind Gegenstand der diesbezüglichen Unteransprüche.

Wiederum weiterer Gegenstand der vorliegenden Erfindung gemäß einem fünften Aspekt der vorliegenden Erfindung ist ein Dämmstoff, aufweisend ein poröses Material nach Anspruch 11.

Weiterer Gegenstand der vorliegenden Erfindung gemäß einem sechsten Aspekt der vorliegenden Erfindung ist eine Baustofftrockenmischung nach Anspruch 12.

Wiederum weiterer Gegenstand der vorliegenden Erfindung gemäß einem siebten Aspekt der vorliegenden Erfindung ist eine pastöse Dämmmasse nach Anspruch 13.

Schließlich ist weiterer Gegenstand der vorliegenden Erfindung gemäß einem achten Aspekt der vorliegenden Erfindung eine Wärmedämmung nach Anspruch 14.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich auch in Bezug auf die übrigen Erfindungsaspekte entsprechend gelten, ohne dass dies einer ausdrücklichen Erwähnung bedarf.

Zudem gilt, dass alle im Folgenden genannten Werte- bzw. Parameterangaben oder dergleichen grundsätzlich mit genormten, bzw. standardisierten oder explizit angegebene Bestimmungsverfahren oder mit dem Fachmann auf diesem Gebiet an sich geläufigen Bestimmungsmethoden ermittelt bzw. bestimmt werden können.

Darüber hinaus versteht es sich für den Fachmann von selbst, dass gewichts- oder mengenbezogene Prozentangaben vom Fachmann derart ausgewählt werden, dass in der Summe 100 % resultieren; dies versteht sich jedoch von selbst.

Dies vorausgeschickt wird im Folgenden die vorliegende Erfindung näher beschrieben.

Gegenstand der vorliegenden Erfindung - gemäß einem **ersten** Aspekt der vorliegenden Erfindung - ist somit ein poröses mineralisch basiertes Material, aufweisend geschlossene Poren, wobei die geschlossenen Poren insbesondere zumindest teilweise ein wärmedämmendes Gas aufweisen.

Denn, wie die Anmelderin herausgefunden hat, lässt sich die Wärmeleitfähigkeit von porösen Materialien deutlich verbessern, wenn die geschlossenen Poren im Inneren des Materials mit einem wärmedämmenden Gas gefüllt sind. Auf diese Weise ist es möglich, die wärmedämmenden Eigenschaften des erfindungsgemäßen porösen Materials gegenüber vergleichbaren Materialien ohne wärmedämmende Gasfüllung deutlich zu verbessern.

Da das erfindungsgemäße poröse Material mineralisch basiert ist, kann es problemlos in üblicherweise mineralisch basierte Baustofftrockenmischungen eingearbeitet werden, welche dann beispielsweise zur Herstellung von Dämmputzen verwendet werden.

Unter einem mineralisch basierten Material ist im Rahmen der vorliegenden Erfindung ein anorganisches Material zu verstehen, welches auf Basis mindestens eines Minerals ausgebildet ist. Die Verwendung mineralisch basierter Materialien hat darüber hinaus den Vorteil, dass die Materialien nicht brennbar sind und somit ohne weitergehende Brandschutzmaßnahmen verbaut werden können.

Das erfindungsgemäße poröse mineralisch basierte Material zeichnet sich dadurch aus, dass zumindest ein Anteil seiner Gesamtporosität, d. h. das Verhältnis von Hohlraumvolumen zu Gesamtvolumen des Materials, durch geschlossene Poren gebildet wird. Derartige geschlossene Poren - auch als geschlossene Porosität - bezeichnet, befinden sich abgeschlossen im Inneren des Materials und haben keine Verbindung zur Umgebung. In geschlossenen Poren eingelagerte Gase können folglich nicht oder nur äußert langsam aus dem Inneren des Materials an die Umgebung gelangen. Im Gegensatz zu geschlossenen Poren enden offene Poren an der äußeren Oberfläche des Materials und stehen somit mit der Umgebung in Kontakt, weshalb sich diese Poren nicht zur Speicherung von wärmedämmenden Gasen eignen.

Das im Rahmen der vorliegenden Erfindung verwendete poröse Material kann sowohl offene als auch geschlossene Poren aufweisen. Wichtig ist jedoch, dass das poröse Material geschlossene Poren aufweist, da nur diese zur dauerhaften Aufnahme von Gasen geeignet sind.

Im Rahmen der vorliegenden Erfindung wird es darüber hinaus bevorzugt, wenn der Anteil der geschlossenen Poren des porösen Materials, welche das wärmedämmende Gas enthalten, möglichst hoch ist. Weiterhin sind die geschlossenen Poren mit einem wärmedämmenden Gas vollständig gefüllt.

Wie die Anmelderin in vollkommen überraschender Weise herausgefunden hat, ist es durch ein wenig aufwendiges Verfahren möglich, die geschlossenen Poren des erfindungsgemäßen porösen mineralisch basierten Materials bei ihrer Bildung mit einem wärmedämmenden Gas zu befüllen.

Unter dem wärmedämmenden Gas ist im Rahmen der vorliegenden Erfindung ein Gas zu verstehen, dessen Wärmeleitfähigkeit geringer ist als die von Luft, welche bei 25 °C 0,0262 W/(m·K) beträgt. Das wärmedämmende Gas kann dabei eine Einzelsubstanz, aber auch ein Gasgemisch sein. Wenn im Rahmen der vorliegenden Erfindung Werte für Wärmeleitfähigkeiten angegeben werden, so beziehen sich diese üblicherweise auf die Wärmleitfähigkeit bei 25 °C.

Im Rahmen der vorliegenden Erfindung hat es sich als vorteilhaft erwiesen, wenn das Material in Form von Partikeln vorliegt. Bei dem porösen mineralisch basierten Material nach der Erfindung handelt es sich somit bevorzugt um poröse mineralisch basierte Partikel. Die Verwendung von partikelförmigen Materialien hat den Vorteil, dass diese als schütt- bzw. rieselfähiges Material vorliegen, welches beispielsweise problemlos in loser Schüttung als Dämmmaterial verwendet werden kann. Darüber hinaus können partikelförmige Materialien, insbesondere mineralische partikelförmige Mineralien problemlos in Baustofftrockenmischungen eingesetzt werden und beispielsweise zu Putzen verarbeitet werden, da sich die Mischungen aufgrund der üblicherweise geringen Partikelgröße der porösen Materialien problemlos zu den gewünschten Formen verarbeiten lassen.

Das erfindungsgemäße Material weist darüber hinaus auch Abriebfestigkeiten und Bruchfestigkeiten auf, welche sich für eine Verwendung in Dämmstoffsystemen, beispielsweise in Dämmputzen oder Wärmedämmverbundsystemen, eignen.

Insbesondere bei Verwendung mineralischer Bindemittelsysteme, d. h. zementbasierter Systeme oder silikatischer Bindemittelsysteme, weist das erfindungsgemäße poröse mineralisch basierte Material eine hohe Kompatibilität zu den Bindemittelsystemen auf und resultiert somit in Putzen oder Formkörpern, welche eine erhöhte Stabilität aufweisen.

Das erfindungsgemäße poröse mineralisch basierte Material kann insbesondere wenn es in Partikelform vorliegt, als Füllstoff in einer Vielzahl von Anwendungen eingesetzt werden. Denkbar sind sämtliche Anwendungen, bei denen beispielsweise expandierter Vermiculit oder expandierter Perlit eingesetzt werden. Das erfindungsgemäße Material besitzt gegenüber diesen seit langem bekannten Füll- und Dämmstoffen den Vorteil, dass es bei gleichen mechanischen Eigenschaften eine deutlich verbesserte Wärmedämmung, d. h. eine kleinere Wärmeleitfähigkeit aufweist.

Was nun die Partikelgrößen des erfindungsgemäßen Materials anbelangt, so können diese naturgemäß in weiten Bereichen variieren. Es hat sich jedoch bewährt, wenn die Partikel des porösen Materials absolute Partikelgrößen im Bereich von 10 bis 5.000 µm, insbesondere 20 bis 4.000 µm, vorzugsweise 30 bis 3.000 µm, bevorzugt 40 bis 2.000 µm, besonders bevorzugt 50 bis 1.500 µm, aufweisen. Materialien mit den vorgenannten Partikelgrößen lassen sich besonders gut als Füllstoffe in Bindemittelsysteme einarbeiten, und zwar in Mengen von bis 70 Gew.-%, bezogen auf das System aus Bindemittel und porösem mineralisch basierten Material.

Das erfindungsgemäße Material weist im Allgemeinen Poren mit Porengrößen im Bereich von 0,05 bis 800 µm, insbesondere 0,1 bis 700 µm, vorzugsweise 0,5 µm bis 500 µm, bevorzugt 1 µm bis 300 µm, besonders bevorzugt 2 bis 200 µm, auf. Sowohl die offenen als auch die geschlossenen Poren des porösen mineralisch basierten Materials weisen im Allgemeinen die vorgenannten Porengrößen auf.

Im Rahmen der vorliegenden Erfindung ist das Material aus der Gruppe von expandiertem Perlit, expandiertem Vermiculit, Blähschiefer und deren Mischungen ausgewählt.

Die zuvor genannten mineralischen Stoffe eignen sich in hervorragender Weise, um wärmedämmende Gase einzuschließen, da sie aus Ausgangsmaterialien gewonnen werden, welche unter Wärmeeinwirkung auf ein Vielfaches ihres ursprünglichen Volumens expandieren, wobei eine Vielzahl von Poren in den Materialien gebildet wird. Durch geeignete Wahl der Verfahrensbedingungen bei der Herstellung ist es möglich, wärmedämmende Gase gezielt in das Porensystem, insbesondere die im Endprodukt geschlossenen Poren, der Materialien einzubringen. Es entsteht somit im weitesten Sinne ein mineralischer Schaum, welcher gezielt mit wärmedämmenden Gasen vollständig gefüllt ist.

Was nun die Schüttdichte des erfindungsgemäßen porösen Materials anbelangt, so kann diese im Rahmen der vorliegenden Erfindung in weiten Bereichen variieren. Es wird jedoch bevorzugt, wenn das poröse Material eine Schüttdichte im Bereich von 40 bis 150 kg/m³, insbesondere 50 bis 100 kg/m³, vorzugsweise 60 bis 80 kg/m³, aufweist. Das poröse Material nach der Erfindung kann somit einerseits in loser Schüttung als Dämmmaterialien verwendet werden, andererseits ist es jedoch auch möglich, das poröse Material nach der Erfindung in Dämmstoffe, wie beispielsweise Wärmedämmverbundsysteme oder Dämmputze, einzuarbeiten, ohne dass das Gewicht der Dämmstoffsysteme stark ansteigt.

Üblicherweise weist das Material die Brennbarkeit A1 oder A2 gemäß DIN 4102 auf. Da das poröse mineralisch basierte Material nach der Erfindung rein anorganisch basiert ist, weist es im Allgemeinen sogar die Brennbarkeit A1 gemäß DIN 4102 auf. Es ist jedoch möglich, das poröse Material einer Oberflächenbehandlung mit organischen Materialien, insbesondere einer Hydrophobierung, zu unterziehen, um die Oberflächeneigenschaften gezielt einzustellen, beispielsweise um die Wasserresorption zu verringern bzw. die Kompatibilität mit organischen Bindemittelsystemen zu verbessern oder auch um die Durchlässigkeit gegenüber dem wärmedämmenden Gas einzustellen. In diesem Fall kann es sein, dass das poröse Material nach der Erfindung die Brennbarkeit A2 gemäß DIN 4102 aufweist. Das poröse Material nach der Erfindung weist somit im Vergleich zu kunststoffbasierten Materialien eine deutlich verringerte Brennbarkeit auf, und kann daher auch in Bereichen mit erhöhter Brandgefahr bzw. ohne weitere Brandschutzmaßnahmen verbaut werden.

Im Rahmen der vorliegenden Erfindung wird es darüber hinaus bevorzugt, wenn das Material in loser Schüttung eine Wärmeleitfähigkeit bei 25 °C im Bereich von 0,020 bis 0,045 W/(mK), insbesondere 0,020 bis 0,040 W/(mK), vorzugsweise 0,022 bis 0,038 W/(mK), bevorzugt 0,025 bis 0,035 W/(mK), besonders bevorzugt 0,025 bis 0,030 W/(mK), aufweist.

Was nun das wärmedämmende Gas anbelangt, mit welchem die Poren des erfindungsgemäßen Materials gefüllt sind, so kann dieses in Abhängigkeit von den jeweiligen Bedingungen, insbesondere den geplanten Anwendungen des erfindungsgemäßen Materials sowie wirtschaftlichen Erwägungen, ausgewählt werden.

Es hat sich jedoch bewährt, wenn das im Rahmen der vorliegenden Erfindung verwendete Gas ein Inertgas ist. Unter einem Inertgas ist im Rahmen der vorliegenden Erfindung ein Gas zu verstehen, welches unter Anwendungsbedingungen nicht reaktiv ist und weder mit Bestandteilen des mineralisch basierten porösen Materials reagiert noch, beispielsweise bei Freisetzung aufgrund deiner Zerstörung des porösen Materials, mit der Umgebung.

Das Gas, welches im Rahmen der vorliegenden Erfindung als wärmedämmendes Gas verwendet wird, ist ausgewählt aus der Gruppe der Edelgase und Kohlenstoffdioxid sowie deren Mischungen. Die vorgenannten Gase zeichnen sich zum einen durch äußerst geringe Wärmeleitfähigkeiten aus und zum anderen darüber hinaus dadurch, dass sie äußerst reaktionsträge sind.

Besonders gute Ergebnisse werden in diesem Zusammenhang erhalten, wenn das Gas ausgewählt ist aus der Gruppe bestehend aus Argon, Krypton, Xenon und Kohlenstoffdioxid sowie deren Mischungen, insbesondere Argon und Kohlenstoffdioxid sowie deren Mischungen. Im Rahmen der vorliegenden Erfindung wird es besonders bevorzugt, wenn das Gas Argon ist.

Die zuvor genannten Gase weisen hervorragende Dämmeigenschaften auf, da sie äußerst geringe Wärmeleitfähigkeiten besitzen: So beträgt die Wärmeleitfähigkeit von Kohlenstoffdioxid 0,0168 W/(mK), die Wärmeleitfähigkeit von Argon 0,0179 W/(mK), die Wärmeleitfähigkeit von Krypton 0,0095 W/(mK) und die Wärmeleitfähigkeit von Xenon sogar nur 0,0055 W/(mK), jeweils bei 25 °C. Die genannten Gase besitzen somit hervorragende Dämmeigenschaften, wobei die Verwendung von Kohlenstoffdioxid und Argon besonders bevorzugt ist, da sie in großen Mengen und zu ökonomisch vertretbaren Kosten erhältlich sind. Argon hat darüber hinaus noch den Vorteil, dass es nicht nur nahezu unreaktiv ist, sondern auch ungiftig.

Im Rahmen der vorliegenden Erfindung ist es üblicherweise vorgesehen, dass die Poren des Materials durch Expansion eines Ausgangsmaterials erzeugt werden, insbesondere wobei die Expansion durch Wärmeeinwirkung erfolgt.

Gemäß einer besonderen Ausführungsform der vorliegenden Erfindung kann es vorgesehen sein, dass das Material oberflächenmodifiziert ist, insbesondere zumindest an seiner äußeren Oberfläche hydrophobiert ist. Eine Hydrophobierung kann beispielsweise erforderlich sein, um die Wasserresorption durch das mineralisch basierte Material, welches üblicherweise hydrophil ist, zu verringern bzw. zu vermeiden.

Darüber hinaus kann durch eine gezielte Hydrophobierung, insbesondere durch eine Anbindung von organischen Funktionalitäten an die Oberfläche des mineralisch basierten Materials die Kompatibilität beispielsweise mit organischen Bindemitteln deutlich verbessert werden. Gleichfalls kann durch die Oberflächenmodifizierung die Permeabilität des porösen mineralisch basierten Materials für das wärmedämmende Gas gezielt eingestellt werden. Die Oberflächenmodifizierung, insbesondere Hydrophobierung, erfolgt dabei üblicherweise durch Umsetzung mit einem Oberflächenmodifizierungsmittel, insbesondere einem Hydrophobierungsmittel. Was nun die Auswahl des Oberflächenmodifizierungsmittels anbelangt, so sind hierfür sämtliche geeigneten Substanzen und Stoffe bzw. Stoffgemische verwendbar.

Im Rahmen der vorliegenden Erfindung kann es beispielsweise vorgesehen sein, dass die Oberflächenmodifizierung mittels Aerogelen, Phosphonaten, Sulfonaten, substituierten Aminen, Silanen, Polysiloxanen, Silikonaten, Carbonsäurederivaten, Ethoxylaten, Polyethern und deren Mischungen vorgenommen wird. Insbesondere ist dabei bevorzugt, wenn die Oberflächenmodifizierung mittels Silanen, Silikonaten und Polysiloxanen, vorzugsweise Silanen und Silikonaten, und/oder deren Mischungen erfolgt. Die zuvor genannten Hydrophobierungsmittel verfügen zum einen über organische Reste, welche eine Hydrophobierung der Oberflächen gewährleisten und zum anderen über polare Gruppen, welche mit dem mineralischen Material reagieren bzw. sich an dieses anlagern können.

Weiterer Gegenstand der vorliegenden Erfindung - gemäß einem **zweiten** Aspekt der vorliegenden Erfindung - ist die Verwendung des zuvor beschriebenen porösen Materials als Dämmstoff.

Wie zuvor bereits ausgeführt, kann das poröse Material nach der Erfindung in hervorragender Weise als Dämmstoff, insbesondere als Füllstoff, sowohl in loser Schüttung als auch in Bindemittelsystemen, verwendet werden.

Für weitergehende Einzelheiten zu der erfindungsgemäßen Verwendung des porösen Materials kann auf die vorangehenden Ausführungen zu dem porösen mineralisch basierten Material verwiesen werden.

Wiederum weiterer Gegenstand der vorliegenden Erfindung - gemäß einem **dritten** Aspekt der vorliegenden Erfindung - ist die Verwendung des zuvor beschriebenen porösen Materials zur Herstellung von Baumaterialien, insbesondere von Dämmmaterialien, wie Dämmputzen, Dämmplatten, Wärmedämmverbundsystemen oder dämmenden Massen.

Für weitergehende Einzelheiten zu der erfindungsgemäßen Verwendung kann auf die obigen Ausführungen zu den vorangehenden Erfindungsaspekten verwiesen werden, welche in Bezug auf die erfindungsgemäße Verwendung entsprechend gelten.

Wiederum weiterer Gegenstand der vorliegenden Erfindung - gemäß einem **vierten** Aspekt der vorliegenden Erfindung - ist ein Verfahren zur Herstellung eines mineralisch basierten porösen Materials mit geschlossenen Poren, aufweisend ein wärmedämmendes Gas, insbesondere eines Dämmstoffs, wobei ein expandierfähiges mineralisches Ausgangsmaterial, welches durch Expansion eine poröse Struktur mit geschlossenen Poren bildet, in Gegenwart eines wärmedämmenden Gases expandiert wird, wobei das Ausgangsmaterial ausgewählt ist aus Perlit, Vermiculit, Tonschiefer und deren Mischungen,
wobei das Ausgangsmaterial in einer Prozessatmosphäre expandiert wird, wobei die Prozessatmosphäre das wärmedämmende Gas enthält,
wobei das Gas ausgewählt ist aus der Gruppe der Edelgase und Kohlenstoffdioxid sowie deren Mischungen und
wobei die Prozessatmosphäre das wärmedämmende Gas im Mengen von 50 bis 100 Vol.-%, bezogen auf die Prozessatmosphäre, enthält.

Unter einem expandierfähigen Material ist im Rahmen der vorliegenden Erfindung ein Material zu verstehen, dessen Volumen sich bei zumindest wesentlicher Beibehaltung des Gewichts unter bestimmten Umständen, beispielsweise unter Wärmeeinwirkung, vergrößern kann. Als Beispiel sei insbesondere Perlit genannt, welches bei Temperaturen von ca. 1.000 °C auf das 10- bis 20-fache seines ursprünglichen Volumens expandiert. Bei der Expansion nimmt somit die Dichte der Stoffe ab, wobei insbesondere Hohlräume in den jeweiligen Materialien gebildet werden. Diese Hohlräume werden im Rahmen der vorliegenden Erfindung mit wärmedämmenden Gasen gefüllt, um ein Material mit deutlich verbesserten Wärmedämmeigenschaften zu erhalten.

Durch die Expansion des Ausgangsmaterials müssen nicht ausschließlich geschlossene Poren entstehen, vielmehr können sowohl offene als auch geschlossene Poren gebildet werden, wobei es erfindungsgemäß bevorzugt wird, wenn ein möglichst hoher Anteil geschlossener Poren gebildet wird.

Gemäß einer bevorzugten Ausführungsform der vorliegenden Erfindung liegt das Ausgangsmaterial in Form von Partikeln vor. Insbesondere für den Fall, dass das Endprodukt, nämlich das poröse mineralisch basierte Material, dessen Poren ein wärmedämmendes Gas aufweisen, in Partikelform vorliegt, ist es vorteilhaft, wenn bereits die Ausgangsprodukte in Partikelform vorliegen. Darüber hinaus ist bei der Verwendung partikelförmiger Ausgangsstoffe die spezifische Oberfläche des Ausgangsmaterials gegenüber beispielsweise größeren Formkörpern oder Blöcken deutlich erhöht, so dass eine sehr viel schnellere und vollständige Einlagerung des wärmedämmenden Gases in das Endprodukt möglich ist.

In diesem Zusammenhang hat es sich bewährt, wenn die Partikel des Ausgangsmaterials absolute Partikelgrößen im Bereich von 5 bis 1.000 µm, insbesondere 10 bis 800 µm, vorzugsweise 15 bis 700 µm, bevorzugt 20 bis 600 µm, besonders bevorzugt 40 bis 500 µm, aufweisen.

Das Ausgangsmaterial ist aus Perlit, Vermiculit, Tonschiefer und deren Mischungen, insbesondere Perlit, Vermiculit und deren Mischungen, ausgewählt. Im Rahmen der vorliegenden Erfindung wird es besonders bevorzugt, wenn Perlit als Ausgangsmaterial verwendet wird, da Perlit eine besonders starke Expansion unter Wärmeeinwirkung aufweist und bereits in unmodifizierter Form, d. h. ohne Einbringung eines wärmedämmenden Gases in die poröse Struktur, ein hervorragender Dämmstoff ist.

Was nun die Temperaturbereiche anbelangt, in welchen das Ausgangsmaterial expandiert, so ist dieses im starken Maße von den gewählten Ausgangsmaterialien abhängig. Im Rahmen der vorliegenden Erfindung hat es sich jedoch bewährt, wenn das Ausgangsmaterial bei Temperaturen im Bereich von 750 bis 1.300 °C, insbesondere 850 bis 1.200 °C, vorzugsweise 900 bis 1.100 °C, bevorzugt 950 bis 1.050 °C, expandiert wird.

Das wärmedämmende Gas ist aus der Gruppe der Edelgase und Kohlenstoffdioxid sowie deren Mischungen ausgewählt.

In diesem Zusammenhang werden besonders gute Ergebnisse erhalten, wenn das wärmedämmende Gas ausgewählt ist aus der Gruppe bestehend aus Argon, Krypton, Xenon und Kohlenstoffdioxid sowie deren Mischungen, insbesondere Argon und Kohlenstoffdioxid sowie deren Mischungen. Besonders gute Ergebnisse werden dabei im Rahmen der vorliegenden Erfindung erhalten, wenn das wärmedämmende Gas Argon ist.

Im Rahmen der vorliegenden Erfindung wird das Ausgangsmaterial in einer Prozessatmosphäre expandiert, wobei die Prozessatmosphäre das wärmedämmende Gas enthält.

Die Prozessatmosphäre muss dabei nicht vollständig aus dem wärmedämmenden Gas bestehen, sondern kann andere Gase enthalten, wie beispielsweise Verbrennungsabgase, welche aus der Beheizung eines Ofens stammen.

Im Allgemeinen wird es im Rahmen der vorliegenden Erfindung jedoch bevorzugt, wenn die Prozessatmosphäre das wärmedämmende Gas in Mengen von 70 bis 100 Vol.-%, vorzugsweise 80 bis 99 Vol.-%, bevorzugt 90 bis 99 Vol.-%, besonders bevorzugt 95 bis 99 Vol.-%, bezogen auf die Prozessatmosphäre, enthält.

Im Rahmen der vorliegenden Erfindung wird es somit bevorzugt, wenn die Prozessatmosphäre einen möglichst hohen Anteil an wärmedämmendem Gas aufweist, damit eine möglichst rasche und schnelle Einlagerung des wärmedämmenden Gases in die bei der Expansion gebildeten Poren vorgenommen werden kann.

Die zuvor genannten Anteile an wärmedämmendem Gas in der Prozessatmosphäre sind besonders bevorzugt, können jedoch in der Regel nur erreicht werden, wenn das Ausgansmaterial nicht mittels Verbrennungsabgasen, sondern beispielsweise durch elektrische Widerstandsheizungen oder durch Eintrag elektromagnetischer Strahlung erwärmt und expandiert wird.

Wenn die für die Expansion des Ausgangsmaterials benötigten Temperaturen mittels Verbrennungsabgasen erzeugt werden, so enthält die Prozessatmosphäre das wärmedämmende Gas üblicherweise in geringeren Anteilen, insbesondere enthält die Prozessatmosphäre das wärmedämmende Gas in Mengen von 40 bis 90 Vol-%, insbesondere 60 bis 85 Vol.-%, vorzugsweise 70 bis 80 Vol.-%, bezogen auf die Prozessatmosphäre.

Im Rahmen der vorliegenden Erfindung kann es weiterhin auch vorgesehen sein, dass die Prozessatmosphäre keine homogene Verteilung des wärmedämmenden Gases aufweist, sondern vielmehr einen Konzentrationsgradienten des wärmedämmenden Gases. Dies ist insbesondere dann der Fall, wenn wie beispielsweise bei klassischen Öfen zur Expansion von Vermiculit und Perlit, der Ofen direkt mit den Verbrennungsabgasen eines Brenners beheizt wird. Hier wird vorzugsweise im Gegenstromprinzip das wärmedämmende Gas entgegen der Arbeitsrichtung des Ofens eingeführt, so dass während und unmittelbar nach dem Inkontaktbringen der Ausgangsmaterialien mit den heißen Abgasen, ein Austausch von Verbrennungsgasen (Abgase) gegen wärmedämmenden Gas in der Prozessatmosphäre vollzogen wird. Auf diese Weise ist es möglich, einen Austausch der Verbrennungsabgase gegen wärmedämmendes Gas in der Prozessatmosphäre zu erzielen und so die Poren des expandierten bzw. expandierenden Materials mit dem wärmedämmenden Gas zu füllen.

Gemäß einer bevorzugten Ausführungsform der vorliegenden Erfindung wird das expandierte Material, insbesondere die expandierten Partikel, getempert. Unter dem Begriff "Tempern" wird im Rahmen der vorliegenden Erfindung insbesondere verstanden, dass ein spezielles Temperaturregime, insbesondere bei erhöhter Temperatur und über einen längeren Zeitraum andauernd, angewandt wird.

Wenn im Rahmen der vorliegenden Erfindung das expandierte Material, insbesondere die expandierten Partikel getempert werden, so hat es sich bewährt, wenn das expandierte Material bei Temperaturen im Bereich von 500 bis 1.200 °C, insbesondere 600 bis 1.100 °C, vorzugsweise 700 bis 1.000 °C, bevorzugt 800 bis 900 °C, getempert wird.

Durch ein Tempern des expandierten Materials, insbesondere in den vorbezeichneten Temperaturbereichen, schließen sich - ohne sich auf diese Theorie festlegen zu wollen - die bei der Expansion des Ausgangsmaterials gebildeten Poren, welche zu einem hohen Anteil offene Poren sind, und schließen das wärmedämmende Gas ein.

Gemäß einer bevorzugten Ausführungsform der vorliegenden Erfindung wird somit in einem auf einen Ersten Verfahrensschritt (a) der Expansion des Ausgangsmaterials (Expansionsverfahrensschritt) folgenden zweiten Verfahrensschritt (b) das expandierte Material getempert (Temperverfahrensschritt) getempert werden.

Besonders gute Ergebnisse werden in diesem Zusammenhang erhalten, wenn das erfindungsgemäße Verfahren derart durchgeführt wird, dass
(a) in einem ersten Verfahrensschritt (Expansionsverfahrensschritt)ein expandierfähiges mineralisches Ausgangsmaterial (Edukt) erwärmt, insbesondere auf Temperaturen im Bereich von 750 bis 1.300 °C, und expandiert wird, wobei das Ausgangsmaterial gleichzeitig oder nachfolgend zu der Erwärmung in eine Prozessatmosphäre eingebracht wird, welche mindestens ein wärmedämmenden Gas enthält, und
(b) gegebenenfalls in einem auf den ersten Verfahrensschritt (a) folgenden zweiten Verfahrensschritt (Temperverfahrensschritt) das im Verfahrensschritt (a) expandierte Material getempert wird, insbesondere bei Temperaturen im Bereich von 500 bis 1.200 °C.

Auf diese spezielle Ausgestaltung des erfindungsgemäßen Verfahrens lassen alle zuvor beschriebenen Ausführungsformen und Merkmale des erfindungsgemäßen Verfahrens uneingeschränkt anwenden.

Im Rahmen der vorliegenden Erfindung kann es darüber hinaus auch vorgesehen sein, dass die expandierten Materialien, insbesondere die expandierten Partikel, in einen nachfolgenden Verfahrensschritt oberflächenmodifiziert, insbesondere hydrophobiert, werden. Dies erfolgt insbesondere in einem auf den ersten Verfahrensschritt der Expansion (Expansionsverfahrensschritt) (a) und auf den gegebenenfalls folgenden Verfahrensschritt des Temperns (Temperverfahrensschritt) (b) folgenden dritten Verfahrensschritt (c).

Im Rahmen der vorliegenden Erfindung hat es sich darüber hinaus bewährt, wenn die Oberflächenmodifzierung mittels Aerogelen, Phosphonaten, Sulfonaten, substituierten Aminen, Silanen, Polysiloxanen, Silikonaten, Carbonsäurederivaten, Ethoxylaten, Polyethern, Polyamiden und/oder deren Mischungen oder durch Gasphasenfluorierung erfolgt. Besonders gute Ergebnisse werden in diesem Zusammenhang erhalten, wenn die Oberflächenmodifzierung mittels Silanen, Silikonaten und Polysiloxanen, vorzugsweise Silanen und Silikonaten, und/oder deren Mischungen erfolgt. Vorzugsweise wird die Oberflächenmodifizierung als dünne Schicht, insbesondere als Monolage bzw. Monolayer, auf das expandierte Material, insbesondere die expandierten Partikel, aufgebracht wird.

Durch eine Oberflächenmodifizierung können insbesondere organische Reste an das mineralisch basierte Grundmaterial angeknüpft werden, wodurch eine gezielte Einstellung der Oberflächeneigenschaften möglich ist. Hierdurch kann einerseits eine Hydrophobierung der Oberfläche des erhaltenen Materials erzeugt werden, so dass die Wasserresorption des mineralisch basierten Materials deutlich reduziert ist. Andererseits können auch die Kompatibilität mit organischen Bindemittelsystemen gezielt eingestellt werden. Darüber hinaus kann durch eine Oberflächenmodifizierung auch die Staubentwicklung bei Schüttvorgängen deutlich verringert werden.

Weiterhin ermöglicht die Oberflächenmodifizierung eine gezielte Einstellung der Durchlässigkeit für das wärmedämmende Gas, d.h. in Abhängigkeit von dem verwendeten wärmedämmenden Gas bzw. Gasgemisch kann die Permeabilität des Dämmstoffes für das wärmedämmende Gas durch gezielte Auswahl der Oberflächenmodifizierung eingestellt und insbesondere weiter gesenkt werden. Durch eine Oberflächenmodifizierung wird somit zusätzlich gewährleistet, dass das in den Poren des Dämmstoffes eingeschlossene wärmedämmende Gas auch langfristig in den Poren verbleibt, so dass die guten Wärmedämmeigenschaften des Dämmstoffs erhalten bleiben.

Für weitergehende Einzelheiten zu diesem Erfindungsaspekt kann auf die obigen Ausführungen zu den übrigen Erfindungsaspekten verwiesen werden, welche in Bezug auf das erfindungsgemäße Verfahren entsprechend gelten.

Wiederum weiterer Gegenstand der vorliegenden Erfindung - gemäß einem **fünften** Aspekt der vorliegenden Erfindung - ist ein Dämmstoff, aufweisend ein poröses Material, insbesondere poröse Partikel, wie zuvor beschrieben. Der erfindungsgemäße Dämmstoff kann insbesondere in loser Schüttung oder in weiteren Dämmmaterialien, wie beispielsweise Dämmputzen oder Dämmplatten, verwendet werden.

Für weitergehende Einzelheiten zu diesem Erfindungsaspekt kann auf die obigen Ausführungen zu den übrigen Erfindungsaspekten verwiesen werden, welche in Bezug auf den erfindungsgemäßen Dämmstoff entsprechend gelten.

Wiederum weiterer Gegenstand der vorliegenden Erfindung - gemäß einem **sechsten** Aspekt der vorliegenden Erfindung - ist eine Baustofftrockenmischung, aufweisend ein poröses Material, insbesondere poröse Partikel, wie zuvor beschrieben.

Die erfindungsgemäße Baustofftrockenmischung eignet sich insbesondere in hervorragender Weise zur Herstellung von Dämmputzen.

Für weitergehende Einzelheiten zu diesem Erfindungsaspekt kann auf die obigen Ausführungen zu den übrigen Erfindungsaspekten verwiesen werden, welche in Bezug auf die erfindungsgemäße Baustofftrockenmischung entsprechend gelten.

Wiederum weiterer Gegenstand der vorliegenden Erfindung - gemäß einem **siebten** Aspekt der vorliegenden Erfindung - ist eine pastöse Dämmmasse, aufweisend ein poröses Material, insbesondere poröse Partikel, wie zuvor beschrieben.

Die erfindungsgemäßen pastösen Dämmmassen sind beispielsweise erhältlich durch Einbringen der zuvor beschriebenen porösen Materialien bzw. porösen Partikel in ein flüssiges Bindemittelsystem, welches entweder auf Basis organischer Verbindungen, wie beispielsweise Acrylaten, oder anorganischer Verbindungen, wie beispielsweise Silikaten, insbesondere Wasserglas, ausgebildet ist. Die Verwendung anorganischer Bindemittelsysteme ist dabei bevorzugt.

Mit den pastösen Dämmmassen nach der Erfindung können beispielsweise Hohlräume in Baumaterialien, wie beispielsweise Hohlziegeln, gefüllt werden, wodurch deren Gewicht nicht signifikant gesteigert wird, jedoch die Wärmedämmung um ein Vielfaches verbessert wird.

Darüber hinaus ist es auch möglich, die erfindungsgemäßen pastösen Dämmmassen flexibel an Bauwerken zur genau abgestimmten lokalen Dämmung, beispielsweise von Rissen im Mauerwerk oder Anschlussstellen zwischen verschiedenen Bauteilen, zu verwenden.

Für weitergehende Einzelheiten zu diesem Erfindungsaspekt kann auf die obigen Ausführungen zu den übrigen Erfindungsaspekten verwiesen werden, welche in Bezug auf die erfindungsgemäßen pastösen Dämmmassen entsprechend gelten.

Schließlich ist wiederum weiterer Gegenstand der vorliegenden Erfindung - gemäß einem **achten** Aspekt der vorliegenden Erfindung - eine Wärmedämmung, aufweisend ein poröses Material, insbesondere poröse Partikel, wie zuvor beschrieben.

Für weitergehende Einzelheiten zu diesem Erfindungsaspekt kann auf die obigen Ausführungen zu den übrigen Erfindungsaspekten verwiesen werden, welche in Bezug auf die erfindungsgemäße Wärmedämmung entsprechend gelten.

## Patentansprüche

1. Poröses mineralisch basiertes Material, aufweisend geschlossene Poren, wobei das Material ausgewählt ist aus der Gruppe von expandiertem Perlit, expandiertem Vermiculit, Blähschiefer und deren Mischungen,
**dadurch gekennzeichnet,**
**dass** die geschlossenen Poren mit einem wärmedämmenden Gas vollständig gefüllt sind, wobei das Gas ausgewählt ist aus der Gruppe der Edelgase und Kohlenstoffdioxid sowie deren Mischungen.

2. Material nach einem Anspruch 1, **dadurch gekennzeichnet, dass** das Material in Form von Partikeln vorliegt, insbesondere wobei die Partikel des porösen Materials absolute Partikelgrößen im Bereich von 10 bis 5.000 µm, insbesondere 20 bis 4.000 µm, vorzugsweise 30 bis 3.000 µm, bevorzugt 40 bis 2.000 µm, besonders bevorzugt 50 bis 1.500 µm, aufweisen.

3. Material nach Anspruch 1 oder 2, **dadurch gekennzeichnet, dass** das Material in loser Schüttung eine Wärmeleitfähigkeit bei 25 °C im Bereich von 0,020 bis 0,045 W/(mK), insbesondere 0,020 bis 0,040 W/(mK), vorzugsweise 0,022 bis 0,038 W/(mK), bevorzugt 0,025 bis 0,035 W/(mK), besonders bevorzugt 0,025 bis 0,030 W/(mK), aufweist.

4. Material nach einem der vorangehenden Ansprüche, **dadurch gekennzeichnet, dass** das Material oberflächenmodifiziert ist, insbesondere zumindest an seiner äußeren Oberfläche hydrophobiert ist.

5. Verwendung eines porösen Materials nach einem der Ansprüche 1 bis 4 als Dämmstoff, insbesondere zur Wärmedämmung.

6. Verwendung eines porösen Materials nach einem der Ansprüche 1 bis 4 zur Herstellung von Baumaterialien, insbesondere von Dämmmaterialien, wie Dämmputzen, Dämmplatten, Wärmedämmverbundsystemen oder dämmenden Massen.

7. Verfahren zur Herstellung eines mineralisch basierten porösen Materials mit geschlossenen Poren, aufweisend ein wärmedämmendes Gas, insbesondere eines Dämmstoffs,
**dadurch gekennzeichnet,**
**dass** ein expandierfähiges mineralisches Ausgangsmaterial, welches durch Expansion eine poröse Struktur bildet, in Gegenwart eines wärmedämmenden Gases expandiert wird, wobei das Ausgangsmaterial ausgewählt ist aus Perlit, Vermiculit, Tonschiefer und deren Mischungen, wobei das Ausgangsmaterial in einer Prozessatmosphäre expandiert wird, wobei die Prozessatmosphäre das wärmedämmende Gas enthält, wobei das Gas ausgewählt ist aus der Gruppe der Edelgase und Kohlenstoffdioxid sowie deren Mischungen und wobei die Prozessatmosphäre das wärmedämmende Gas im Mengen von 50 bis 100 Vol.-%, bezogen auf die Prozessatmosphäre, enthält.

8. Verfahren nach Anspruch 7, **dadurch gekennzeichnet, dass** das Ausgangsmaterial unter erhöhter Temperatur, insbesondere unter Wärmeeinwirkung, expandiert wird, insbesondere wobei das Ausgangsmaterial bei Temperaturen im Bereich von 750 bis 1.300 °C, insbesondere 850 bis 1.200 °C, vorzugsweise 900 bis 1.100 °C, bevorzugt 950 bis 1.050 °C, expandiert wird.

9. Verfahren nach einem der Ansprüche 7 oder 8, **dadurch gekennzeichnet, dass** das expandierte Material, insbesondere die expandierten Partikel, getempert wird.

10. Verfahren nach einem der Ansprüche 7 bis 9, **dadurch gekennzeichnet, dass** das expandierte Material, insbesondere die expandierten Partikel, in einem nachfolgendenden Verfahrensschritt oberflächenmodifiziert, insbesondere hydrophobiert, wird.

11. Dämmstoff, aufweisend ein poröses Material, insbesondere poröse Partikel, nach einem der Ansprüche 1 bis 4.

12. Baustofftrockenmischung, aufweisend ein poröses Material, insbesondere poröse Partikel, nach einem der Ansprüche 1 bis 4.

13. Pastöse Dämmmasse, aufweisend ein poröses Material, insbesondere poröse Partikel, nach einem der Ansprüche 1 bis 4.

14. Wärmedämmung, aufweisend ein poröses Material, insbesondere poröse Partikel, nach einem der Ansprüche 1 bis 4.

## Claims

1. Porous mineral-based material comprising closed pores, wherein the material is selected from the group of expanded perlite, expanded vermiculite, expanded shale and mixtures thereof,
**characterized in that**
the closed pores are filled completely with a thermally insulating gas, wherein the gas is selected from the group of noble gases and carbon dioxide and mixtures thereof.

2. Material according to a claim 1, **characterized in that** the material is in the form of particles, in particular wherein the particles of the porous material comprise absolute particle sizes in the range of 10 to 5,000 µm, in particular 20 to 4,000 µm, preferably 30 to 3,000 µm, more preferably 40 to 2,000 µm, particularly preferably 50 to 1,500 µm.

3. Material according to claim 1 or 2, **characterized in that** the material in loose filling comprises a thermal conductivity at 25 °C in the range of 0.020 to 0.045 W/(mK), in particular 0.020 to 0.040 W/(mK), preferably 0.022 to 0.038 W/(mK), more preferably 0.025 to 0.035 W/(mK), particularly preferably 0.025 to 0.030 W/(mK).

4. Material according to one of the preceding claims, **characterized in that** the material is surface-modified, in particular is hydrophobized at least on its outer surface.

5. Use of a porous material according to one of claims 1 to 4 as an insulating material, in particular for thermal insulation.

6. Use of a porous material according to one of claims 1 to 4 for producing building materials, in particular insulating materials, such as insulating plasters, insulating boards, composite thermal insulation systems or insulating masses.

7. Method for producing a porous mineral-based material with closed pores, comprising a thermally insulating gas, in particular an insulating material,
**characterized in that**
an expandable mineral starting material, which forms a porous structure through expansion, is expanded in the presence of a thermally insulating gas, wherein the starting material is selected from perlite, vermiculite, clay shale and mixtures thereof, wherein the starting material is expanded in a process atmosphere, wherein the process atmosphere contains the thermally insulating gas, wherein the gas is selected from the group of noble gases and carbon dioxide and mixtures thereof, and wherein the process atmosphere contains the thermally insulating gas in amounts of 50 to 100 vol. %, based on the process atmosphere.

8. Method according to claim 7, **characterized in that** the starting material is expanded under elevated temperature, in particular under heat influence, in particular wherein the starting material is expanded at temperatures in the range of 750 to 1,300 °C, in particular 850 to 1,200 °C, preferably 900 to 1,100 °C, more preferably 950 to 1,050 °C.

9. Method according to one of claims 7 or 8, **characterized in that** the expanded material, in particular the expanded particles, is tempered.

10. Method according to one of claims 7 to 9, **characterized in that** the expanded material, in particular the expanded particles, in a subsequent method step is surface-modified, in particular hydrophobized.

11. Insulating material comprising a porous material, in particular porous particles, according to one of claims 1 to 4.

12. Dry building material mixture comprising a porous material, in particular porous particles, according to one of claims 1 to 4.

13. Pasty insulating composition comprising a porous material, in particular porous particles, according to one of claims 1 to 4.

14. Thermal insulation comprising a porous material, in particular porous particles, according to one of claims 1 to 4.

## Revendications

1. Matériau poreux à base minérale, ayant des pores fermés, le matériau étant choisi dans le groupe de la perlite expansée, de la vermiculite expansée, du schiste expansé et de leurs mélanges,
**caractérisé en ce que**
les pores fermés sont complètement remplis d'un gaz calorifuge, le gaz étant choisi dans le groupe des gaz rares et du dioxyde de carbone ainsi que leurs mélanges.

2. Matériau selon la revendication 1, **caractérisé en ce que** le matériau est sous forme de particules, en particulier les particules du matériau poreux ayant des granulométries absolues comprises entre 10 et 5 000 µm, en particulier entre 20 et 4 000 µm, de préférence entre 30 et 3 000 µm, de préférence entre 40 et 2 000 µm, de manière particulièrement préférée entre 50 et 1 500 µm.

3. Matériau selon la revendication 1 ou 2, **caractérisé en ce que** le matériau en vrac a une conductivité thermique à 25 °C comprise entre 0,020 et 0,045 W/(mK), en particulier entre 0,020 et 0,040 W/(mK), de préférence entre 0,022 et 0,038 W/(mK), de préférence entre 0,025 et 0,035 W/(mK), de manière particulièrement préférée entre 0,025 et 0,030 W/(mK).

4. Matériau selon l'une des revendications précédentes, **caractérisé en ce que** le matériau est modifié en surface, en particulier est rendu hydrophobe au moins sur sa surface extérieure.

5. Utilisation d'un matériau poreux selon l'une des revendications 1 à 4 comme matériau isolant, en particulier pour l'isolation thermique.

6. Utilisation d'un matériau poreux selon l'une des revendications 1 à 4 pour la fabrication de matériaux de construction, en particulier de matériaux isolants, tels que des enduits isolants, des panneaux isolants, des systèmes composites d'isolation thermique ou des substances isolantes.

7. Procédé de fabrication d'un matériau poreux à base minérale à pores fermés, comprenant un gaz calorifuge, en particulier un matériau isolant,
**caractérisé en ce que**
un produit de départ minérale expansible, qui forme une structure poreuse par expansion, est expansé en présence d'un gaz calorifuge, le produit de départ étant choisi parmi la perlite, la vermiculite, l'ardoise et leurs mélanges, le produit de départ étant expansé dans une atmosphère de traitement, l'atmosphère de traitement contenant le gaz calorifuge, le gaz étant choisi dans le groupe des gaz rares et du dioxyde de carbone et leurs mélanges et l'atmosphère de traitement contenant le gaz calorifuge en des quantités comprises entre 50 et 100 % en volume, par rapport à l'atmosphère du traitement.

8. Procédé selon la revendication 7, **caractérisé en ce que** le produit de départ est expansé à une température élevée, en particulier sous l'action de la chaleur, en particulier le produit de départ étant expansé à des températures comprises entre 750 et 1 300 °C, en particulier entre 850 et 1 200 °C, de préférence entre 900 et 1 100 °C, préférentiellement entre 950 et 1 050 °C.

9. Procédé selon l'une des revendications 7 ou 8, **caractérisé en ce que** le matériau expansé, en particulier les particules expansées, est recuit.

10. Procédé selon l'une des revendications 7 à 9, **caractérisé en ce que** le matériau expansé, en particulier les particules expansées, est modifié en surface, en particulier rendu hydrophobe, dans une étape ultérieure du procédé.

11. Matériau isolant, comprenant un matériau poreux, en particulier des particules poreuses, selon l'une des revendications 1 à 4.

12. Mélange sec de matériaux de construction, comprenant un matériau poreux, en particulier des particules poreuses, selon l'une des revendications 1 à 4.

13. Substance isolante pâteuse, comprenant un matériau poreux, en particulier des particules poreuses, selon l'une des revendications 1 à 4.

14. Isolation thermique comprenant un matériau poreux, en particulier des particules poreuses, selon l'une des revendications 1 à 4.
